# EUROPÄISCHE PATENTSCHRIFT

(11) **EP 3 310 524 B1**
(45) Veröffentlichungstag und Bekanntmachung des Hinweises auf die Patenterteilung: **05.08.2020**
(21) Anmeldenummer: 16729229.1
(22) Anmeldetag: 07.06.2016
(51) Int. Cl.: B23K 26/38, B23K 26/70, B23K 26/08

(54) **VERFAHREN ZUM HAUPTZEITPARALLELEN ENTLADEN EINES FREIGESCHNITTENEN WERKSTÜCKTEILS, ZUGEHÖRIGE LASERSCHNEIDMASCHINE UND COMPUTERPROGRAMMPRODUKT**
METHOD FOR UNLOADING A CUT-FREE WORKPIECE DURING MACHINING, ASSOCIATED LASER CUTTING MACHINE AND COMPUTER PROGRAM PRODUCT
PROCÉDÉ POUR DÉCHARGER EN TEMPS MASQUÉ UNE PARTIE DE PIÈCE DÉGAGÉE PAR DÉCOUPE, MACHINE DE DÉCOUPE AU LASER ASSOCIÉE ET PRODUIT-PROGRAMME INFORMATIQUE ASSOCIÉ

(30) Priorität: 16.06.2015 DE 102015211017
(43) Veröffentlichungstag der Anmeldung: 25.04.2018
(73) Patentinhaber: Trumpf Werkzeugmaschinen GmbH + Co. KG, 71254 Ditzingen (DE)
(72) Erfinder: SCHMAUDER, Frank, 72555 Metzingen (DE); PFISTERER, Dieter, 71732 Tamm (DE); BELLON, Jochen, 71272 Renningen (DE); MATHIAS, Harald, 74357 Bönnigheim (DE); RENZ, Bernd, 71726 Benningen am Neckar (DE)
(74) Vertreter: Kohler Schmid Möbus Patentanwälte
(86) Internationale Anmeldenummer: PCT/EP2016/062856
(87) Internationale Veröffentlichungsnummer: WO 2016/202633

(56) Entgegenhaltungen:
- EP-A1- 2 008 753
- WO-A1-2014/023323
- DE-B3-102014 200 208
- US-B1- 6 609 044

## Beschreibung

Die vorliegende Erfindung betrifft ein Verfahren zum Entladen eines Werkstückteils mittels eines Entladeelements, insbesondere eines Vakuumsaugers, gemäß dem Oberbegriff von Anspruch 1, eine zum Durchführen des Verfahrens geeignete Laserschneidmaschine sowie ein zugehöriges Computerprogrammprodukt.

Ein derartiges Entladeverfahren ist beispielsweise durch die EP 2 008 753 A1 bekannt geworden.

Bei Werkzeugmaschinen mit redundanten Achsen kann die Sollposition eines Werkzeugs durch verschiedene Kombinationen der Bewegungen entlang der redundanten Achsen erreicht werden. Dabei werden zur Erreichung einer möglichst dynamischen Bewegung eine träge (schwere) Grobachse mit großem Bewegungsraum zur Bewegung über das Werkstück (in der Größenordnung Meter) und eine hochbeschleunigbare (leichte) Feinachse mit kleinem Bewegungsraum (in der Größenordnung einige mm bis wenige 10 cm) für das schnelle Abfahren feiner Konturen gekoppelt. Bei Sheetmover-Laserschneidmaschinen, bei denen sowohl das Werkstück als auch der Laserbearbeitungskopf entlang redundanter Achsen bewegt werden, bildet das Bewegen des Blechs die Grobachse und die Bewegung des Laserbearbeitungskopfs die Feinachse.

Aus der eingangs genannten EP 2 008 753 A1 ist ein Laserschneidverfahren bekannt, bei dem sowohl das Werkstück als auch der Laserstrahl bewegbar sind und vor dem Freischneiden eines Werkstückteils von einem (Master/Slave)-Bearbeitungsmodus, in dem Werkstück und Laserstrahl entlang einer gemeinsamen Bewegungsachse bewegt werden, in einen (Slave-)Bearbeitungsmodus geschaltet wird, in dem nur der Laserstrahl bewegt wird, so dass bei ruhendem Blech freigeschnitten werden kann. Dabei wird zwischen den verschiedenen Modi umgeschaltet, nachdem ein Steuerungsbefehl eines Bearbeitungsprogramms abgearbeitet wurde. Dies hat den Nachteil, dass beim Umschalten die Maschinenachsen stoppen und an der Stelle der Schnittkante, wo der Laserstrahl im Master/Slave-Bearbeitungsmodus stoppt und im Slave-Bearbeitungsmodus neu gezündet wird, eine Ansatzmarke entsteht.

Weiterhin ist ein Verfahren zum Freischneiden eines bereits von einem Vakuumsauger angesaugten Werkstückteils mittels eines Laserstrahls bekannt. Dabei stoppen die Maschinenachsen, bevor das Werkstückteil freigeschnitten ist, und das Werkstückteil wird durch den Vakuumsauger angesaugt, um beim Freischneiden ein Verkippen des Werkstückteils zu verhindern. Anschließend werden beim Freischneiden die Maschinenachsen und die Automatisierungsachsen des Vakuumsaugers synchron verfahren, wobei die hochdynamischen Maschinenachsen allerdings nur langsam entsprechend der maximalen Geschwindigkeit der Automatisierungsachsen verfahren können.

Demgegenüber ist es die Aufgabe der Erfindung, bei einem Verfahren zum Entladen eines Werkstückteils mittels eines Entladeelements das Entladen des freigeschnittenen Werkstückteils ohne Zeitverzögerung und dadurch eine höhere Produktivität zu ermöglichen, sowie eine zum Durchführen des Verfahrens geeignete Laserschneidmaschine und ein zugehöriges Computerprogrammprodukt anzugeben.

Diese Aufgabe wird erfindungsgemäß gelöst durch ein Verfahren zum hauptzeitparallelen Entladen eines Werkstückteils mittels eines Entladeelements, insbesondere eines Vakuumsaugers, mit den Merkmalen von Anspruch 1.

Erfindungsgemäß wird die Hauptachse des Werkstücks bis zum Stillstand abgebremst und parallel die Zusatzachse des Laserstrahls beschleunigt. Die Umschaltung von einem (Master/Slave-)Bearbeitungsmodus, in dem Werkstück und Laserstrahl entlang der gemeinsamen Bewegungsachse bewegt werden, in einen (Slave-) Bearbeitungsmodus, in dem nur der Laserstrahl bewegt wird, erfolgt ohne Zeitunterbrechung. Während dem Umschaltvorgang auf die Zusatzachse reduziert die Hauptachse die Geschwindigkeit auf null. Gleichzeitig erhöht die Zusatzachse die Geschwindigkeit auf die Schneidgeschwindigkeit, so dass die resultierende Geschwindigkeit konstant bleibt.

In der Verfahrensvariante (a) wird das freigeschnittene Werkstückteil durch seitliches Verschieben des Restgitters in eine für die Herausnahme des Werkstückteils bessere Entnahmeposition gebracht, in der das Werkstückteil vorteilhaft nach oben ausgedrückt wird, so dass es problemlos unabhängig vom Restgitter entnommen werden kann.

In der Verfahrensvariante (b) wird das Entladeelement ohne Relativbewegung zum Werkstück synchron bis zum Stillstand abgebremst, vorzugsweise auch vor dem Abbremsen bereits synchron zum Werkstück bewegt. Während der synchronen Abbremsung bzw. Bewegung wird das Entladeelement auf das freizuschneidende Werkstückteil abgesenkt und im Falle eines Vakuumsaugers mit dem Vakuumaufbau begonnen. Alternativ kann vor dem Abbremsen das Entladeelement ohne Relativbewegung zum Werkstück synchron mit dem Werkstück bewegt und dabei auf dem Werkstückteil aufgelegt werden, um so das Werkstückteil in der Ebene des Werkstücks zu stabilisieren, bevor das Entladeelement, insbesondere nach Stillstand des Werkstücks, das Werkstückteil fixiert. Auf diese Weise wird verhindert, dass das Werkstückteil aus der Werkstückebene kippt. Wenn das Entladeelement erst nach Stillstand des Werkstücks das Werkstückteil fixiert, hat dies den Vorteil, dass geringere Anforderungen an die Genauigkeit der synchronen Bewegung der Hauptachse und der Bewegungsachse der Automatisierung des Entladeelements gestellt werden können, insbesondere bei Vakuumsaugern, die nachgeben und das Blech nicht zerkratzen. Das Entladeelement stoppt, sobald die Hauptachse stoppt. Der Vakuumaufbau ist optimalerweise genau dann beendet, wenn das Werkstückteil durch die Zusatzachse freigeschnitten ist. Diese Verfahrensvariante (b) ist insbesondere dann sinnvoll, wenn der Vakuumsauger länger benötigt, das Werkstückteil anzusaugen, als die Zusatzachse für den Endschnitt braucht.

Bei der Verfahrensvariante (b) kann am Ende des Endschnitts, also bei freigeschnittenem Werkstückteil, das Entladeelement simultan mit dem Laserschneidkopf in Z-Richtung vom restlichen Werkstück wegfahren. Das Werkstückteil kann ohne zeitliche Unterbrechung durch die Teileentnahme zur nächsten Bearbeitung positioniert werden.

Bevorzugt wird in der Variante (a) das Entladeelement frühestens um seine Aktivierungszeit vor dem Stillstand des Werkstücks und spätestens um seine Aktivierungszeit vor dem Ende des ausgeführten Endschnitts aktiviert. Im Falle von Vakuumsaugern ist die Aktivierungszeit durch die Zeitdauer gegeben, bis im Vakuumsauger ausreichend Vakuum für das Tragen des Werkstücks aufgebaut ist.

Weiter bevorzugt wird in der Variante (a) das Entladeelement vor seiner Aktivierung an der späteren Position des freigeschnittenen Werkstückteils positioniert und anschließend, insbesondere kurz vor oder zeitgleich mit dem Abbremsen der Hauptachse, in Z-Richtung von einer Überfahrhöhe von z.B. 25mm auf die Werkstückoberfläche abgesenkt. Während der weiteren Bearbeitung mit der Zusatzachse kann dann der Vakuumaufbau erfolgen.

Bevorzugt wird in der Variante (b) das Entladeelement um mindestens seine Aktivierungszeit vor dem Stillstand des Werkstücks, insbesondere vor Abbremsbeginn des Werkstücks, aktiviert. Im Falle von Vakuumsaugern ist die Aktivierungszeit durch die Zeitdauer gegeben, bis im Vakuumsauger ausreichend Vakuum für das Tragen des Werkstücks aufgebaut ist.

Weiter bevorzugt wird in der Variante (b) das Entladeelement während der synchronen Bewegung mit dem Werkstück in Richtung auf das Werkstück bis auf eine Wechselwirkungshöhe abgesenkt, also im Falle von Vakuumsaugern auf das spätere Werkstückteil aufgesetzt und mit dem Vakuumaufbau begonnen.

Sofern die Sollbewegung des Laserstrahls entlang zweier Bewegungsachsen in eine Bewegung des Werkstücks und eine Bewegung des Laserstrahls aufgeteilt wird, wird in der Variante (b) das Entladeelement entlang der beiden Bewegungsachsen ohne Relativbewegung zum Werkstück synchron mit dem Werkstück bewegt und bis zum Stillstand abgebremst und während der synchronen Bewegung am noch nicht freigeschnittenen Werkstückteil fixiert.

In der Verfahrensvariante (a) wird das Entladeelement vorzugsweise frühestens bei Stillstand des Werkstücks in Richtung auf das noch nicht freigeschnittene Werkstückteil abgesenkt, ohne dabei auf dem Werkstückteil zu klemmen. Das über dem Werkstückteil angeordnete Entladeelement begrenzt das Verkippen des freigeschnittenen Werkstückteils gegenüber dem Restgitter. Bevorzugt wird dabei das Entladeelement bis auf einen Abstand, der kleiner als die Werkstückdicke ist, auf das Werkstückteil abgesenkt und dadurch so nah über dem Werkstückteil angeordnet, dass das freigeschnittene Werkstückteil nicht so weit verkippen kann, dass es komplett aus der Blechebene heraustreten könnte. Es ist also zwischen Werkstückauflage und Entladeelement weiterhin im Restgitter gehalten, aber noch nicht am Entladeelement fixiert. Besonders bevorzugt wird das Entladeelement bis zur Auflage auf dem Werkstückteil abgesenkt, ohne dabei auf dem Werkstückteil zu klemmen.

Besonders bevorzugt wird vor dem Ausführen des Endschnitts die Bewegung des Laserstrahls in dem Maße beschleunigt, wie die Bewegung des Werkstücks abgebremst wird, damit die resultierende Schneidgeschwindigkeit konstant bleibt und an der Schnittkante keine Ansatzmarken entstehen.

Die Erfindung betrifft in einem weiteren Aspekt auch eine Laserschneidmaschine zum Laserschneiden eines Werkstückteils aus einem insbesondere plattenförmigen Werkstück mittels eines Laserstrahls, mit einem Hauptantrieb zum Bewegen des Werkstücks zumindest entlang einer ersten Bewegungsachse, mit einem Zusatzantrieb zum Bewegen eines den Laserstrahl auf das Werkstück ausrichtenden Laserbearbeitungskopfes zumindest entlang der ersten Bewegungsachse oder zum Bewegen einer den Laserstrahl auf das Werkstück zumindest entlang der ersten Bewegungsachse ablenkenden Ablenkoptik, mit einem relativ zum Werkstück absenkbaren und anhebbaren Entladeelement, insbesondere Vakuumsauger, zum Entladen des freigeschnittenen Werkstückteils, und mit einer Maschinensteuerung, die programmiert ist, das erfindungsgemäße Verfahren auszuführen, also die Antriebe der Laserschneidmaschine entsprechend anzusteuern.

Vorzugsweise umfasst die Laserschneidmaschine noch einen Antrieb zum Bewegen des Entladeelements zumindest entlang der ersten Bewegungsachse.

Die Erfindung betrifft schließlich auch ein Computerprogrammprodukt, welches Codemittel aufweist, die zum Durchführen aller Schritte des erfindungsgemäßen Verfahrens angepasst sind, wenn das Programm auf der Maschinensteuerung der Laserschneidmaschine abläuft.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erfindungsgemäße Laserschneidmaschine;
- Fig. 2: eine erste Variante des erfindungsgemäßen Verfahrens zum hauptzeitparallelen Entladen eines freigeschnittenen Werkstückteils;
- Fig. 3: eine zweite Variante des erfindungsgemäßen Verfahrens zum hauptzeitparallelen Entladen eines freigeschnittenen Werkstückteils;
- Fig. 4: eine dritte Verfahrensvariante zum hauptzeitparallelen Entladen eines freigeschnittenen Werkstückteils; und
- Fig. 5: eine vierte Verfahrensvariante zum hauptzeitparallelen Entladen eines freigeschnittenen Werkstückteils.

In der folgenden Figurenbeschreibung werden für gleiche bzw. funktionsgleiche Bauteile identische Bezugszeichen verwendet.

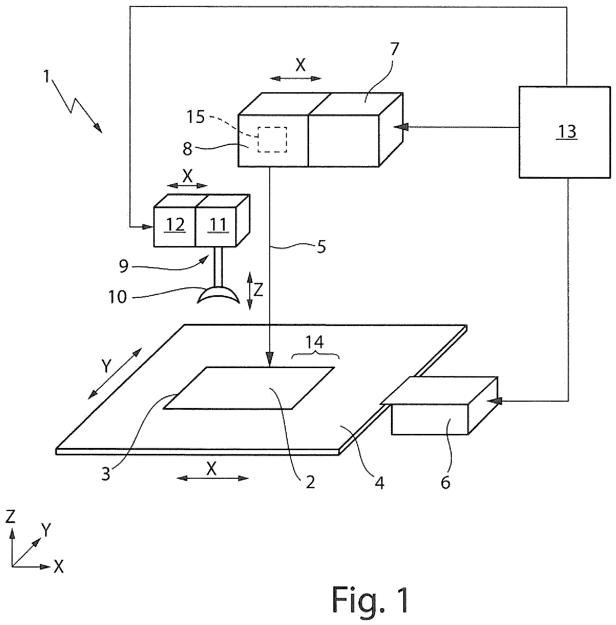

Die in **Fig. 1** gezeigte Laserschneidmaschine **1** dient zum Laserschneiden von Werkstückteilen (z.B. Blechteilen) **2** entlang einer Sollbahn **3** aus einem plattenförmigen Werkstück (z.B. Blech) **4** mittels eines Laserstrahls **5.**

Die Laserschneidmaschine 1 umfasst einen Werkstückantrieb ("Hauptantrieb") **6** zum Bewegen des Werkstücks 4 in der XY-Ebene entlang der X- und Y-Achsen, einen Laserschneidkopfantrieb ("Zusatzantrieb") **7** zum Bewegen eines den Laserstrahl 5 auf das Werkstück 4 ausrichtenden Laserschneidkopfes **8** entlang der X-Achse. Der Laserstrahl 5 wird von einem in Fig. 1 nicht gezeigten Laserstrahlerzeuger, z.B. Festkörperlaser, erzeugt und dem Laserschneidkopf 8 zugeführt. Das Werkstück 4 liegt in der XY-Ebene auf einer Werkstückauflage (nicht gezeigt) auf.

Die Laserschneidmaschine 1 weist weiter eine Entladeeinrichtung **9** mit einem als Vakuumsauger **10** ausgebildeten Entladeelement zum Entnehmen eines freigeschnittenen Werkstückteils 2 und mit einem Z-Antrieb **11** zum Absenken und Anheben des Vakuumsaugers 10 relativ zum Werkstück 4 bzw. zur Werkstückauflage auf. Die Entladeeinrichtung 9 selbst ist mittels eines X-Antriebs **12** in X-Richtung verfahrbar.

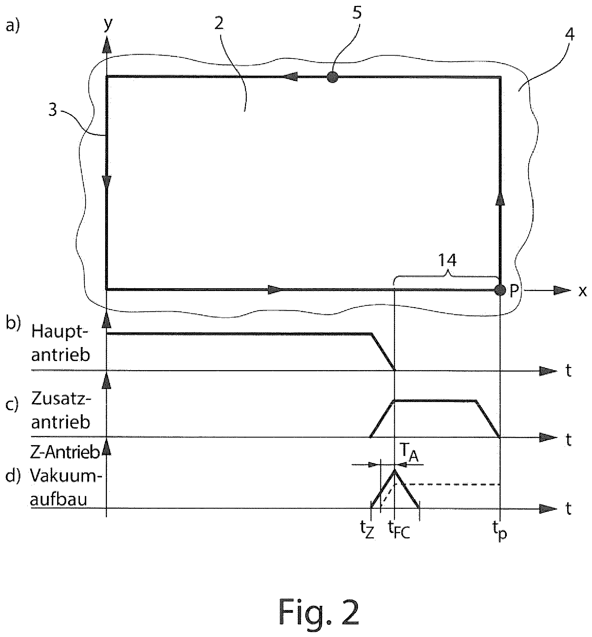

Die Laserschneidmaschine 1 weist außerdem noch eine die einzelnen Antriebe 6, 7, 11, 12 ansteuernde Maschinensteuerung **13** auf, die zusätzlich auch die Sollbewegung des Laserstrahls 5 auf dem Werkstück 4 entlang der X-Achse in eine Bewegung des Werkstücks 4 mittels des Hauptantriebs 6 und eine Bewegung des Laserstrahls 5 mittels des Zusatzantriebs 7 aufteilen kann. Vor dem Ausführen eines das Werkstückteil 2 vom Werkstück 4 trennenden Endschnitts ("Finalcut") **14** wird das Werkstück 4 zunächst mittels des Hauptantriebs 6 bis zum Stillstand abgebremst, bevor dann zum Zeitpunkt t_{FC} (Fign. 2-4) der Endschnitt 14 nur durch Bewegen des Laserstrahls 5 mittels des Zusatzantriebs 7 ausgeführt wird.

In **Fign. 2a bis 2d** ist eine erste Verfahrensvariante zum hauptzeitparallelen Entladen eines freigeschnittenen Werkstückteils 2 gezeigt.

Fig. 2a zeigt die Bewegung des Laserstrahls 5 auf dem Werkstück 4 in X- und Y-Richtung, um das Werkstückteil 2 zu schneiden. Der Laserstrahl 5 beginnt im Punkt **P** und fährt die in sich geschlossene Sollbahn 3, wie durch Pfeile angedeutet, entgegen dem Uhrzeigersinn ab und führt am Ende der Sollbahn 3 den Endschnitt 14 in X-Richtung aus, der das Werkstückteil 2 vom Werkstück 4 trennt. Bis kurz vor dem Endschnitt 14 wird der Laserstrahl 5 auf dem Werkstück 4 allein durch die Bewegung des Werkstücks 4 mittels des Hauptantriebs 6 verfahren. Alternativ würde man zur Beschleunigung des Schneidverfahrens schnelle Richtungswechsel der Sollbahn 3 nicht ausschließlich durch die Bewegung des Werkstücks 4 mittels des Hauptantriebs 6, sondern auch durch eine Bewegung des Laserschneidkopfs 8 mittels des Zusatzantrieb 7 durchführen.

Fign. 2b, 2c zeigen die zeitliche Ansteuerung des Hauptantriebs 6 in der X-Achse (Fig. 2b) und des Zusatzantriebs 7 in der X-Achse (Fig. 2c), jeweils entlang des sich in Fig. 2a entlang der X-Achse erstreckenden unteren Bahnabschnitts der Sollbahn 3. Wie in Fig. 2b gezeigt, wird kurz vor dem Ausführen des X-parallelen Endschnitts 14 der Hauptantrieb 6 in X-Richtung bis zum Stillstand abgebremst und gleichzeitig der Zusatzantrieb 7 beschleunigt (Fig. 2c), so dass bei Stillstand des Hauptantriebs 6, also bei ruhendem Werkstück 4, der Endschnitt 14 nur durch Bewegen des Laserstrahls 5 mittels des Zusatzantriebs 7 ausgeführt wird. Während dieses Umschaltvorgangs von Haupt- auf Zusatzantrieb erhöht der Zusatzantrieb 7 seine Geschwindigkeit in dem Maße, wie der Hauptantrieb 6 seine Geschwindigkeit reduziert, wodurch die resultierende Schneidgeschwindigkeit konstant bleibt.

Fig. 2d zeigt als durchgezogene Linie die zeitliche Ansteuerung des Z-Antriebs 11 sowie als gestrichelte Linie den Vakuumaufbau im Vakuumsauger 10 entlang des sich in Fig. 2a entlang der X-Achse erstreckenden unteren Bahnabschnitts der Sollbahn 3. Während der Bearbeitung wird der Vakuumsauger 10 zunächst auf einen Abstand von ca. 110mm über dem Werkstück 4 positioniert und dann zum Zeitpunkt t_{Z} (t_{Z} < t_{FC}) kurz vor Stillstand des Hauptantriebs 6 bzw. des Werkstücks 4 an der späteren Position des freigeschnittenen Werkstückteils 2 auf die Werkstückoberfläche abgesenkt. Frühestens um die Aktivierungszeit T_{A}, die zum Aufbau des Vakuums im Vakuumsauger 10 erforderlich ist, vor dem Zeitpunkt t_{FC} und spätestens um die Aktivierungszeit T_{A} vor dem Ende des ausgeführten Endschnitts 14 wird mit dem Aufbau des Vakuums im Vakuumsauger 10 begonnen, damit der Vakuumsauger 10 frühestens beim Stillstand des Werkstücks 4 am noch nicht freigeschnittenen Werkstückteil 2 bzw. spätestens am Ende des ausgeführten Endschnitts 14 am dann gerade freigeschnittenen Werkstückteil 2 fixiert ist. Im gezeigten Ausführungsbeispiel wird simultan zur Erhöhung der Schneidgeschwindigkeit des Zusatzantriebs 7 der Z-Antrieb 11 so angesteuert, dass zum Zeitpunkt t_{FC} der Vakuumsauger 10 am noch nicht freigeschnittenen Werkstückteil 2 fixiert ist. Bei Schnittende (Zeitpunkt t_{P}) kann der Vakuumsauger 10 samt Werkstückteil 2 simultan mit dem Laserschneidkopf 8 in Z-Richtung vom Werkstück 4 wegfahren und das Werkstück 4 ohne zeitliche Unterbrechung durch die Teileentnahme zur nächsten Bearbeitung positioniert werden. Die Störkontur des Laserschneidkopfes 8 und eines zugehörigen Strahlschutzes ist so gestaltet, dass die Entladeeinrichtung 9 möglichst dicht an die Schneidkontur heranreicht, um auch sehr kleine Werkstückteile orientiert entnehmen zu können.

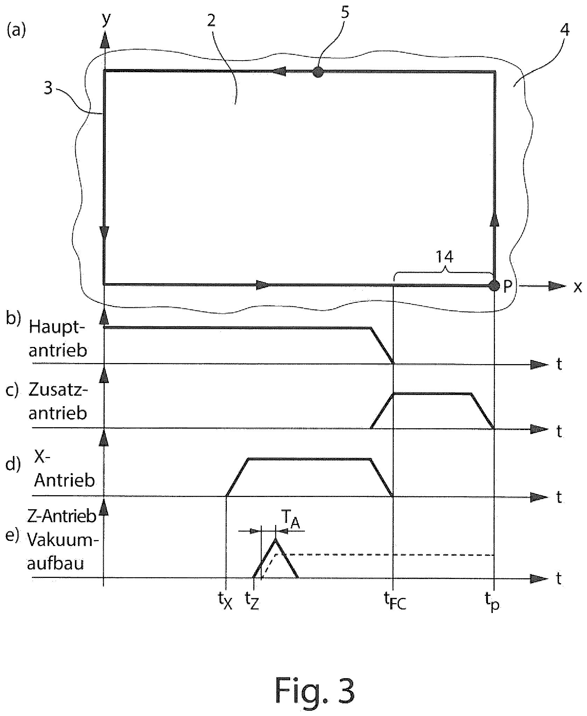

In **Fign. 3a bis 3e** ist eine zweite Verfahrensvariante zum hauptzeitparallelen Entladen eines freigeschnittenen Werkstückteils 2 gezeigt.

Fig. 3a zeigt wieder die Bewegung des Laserstrahls 5 auf dem Werkstück 4 in X- und Y-Richtung, um das Werkstückteil 2 zu schneiden. Wie in der ersten Verfahrensvariante wird kurz vor dem Ausführen des X-parallelen Endschnitts 14 (Zeitpunkt t_{FC}) der Hauptantrieb 6 in X-Richtung bis zum Stillstand abgebremst (Fig. 3b) und gleichzeitig der Zusatzantrieb 7 entsprechend beschleunigt (Fig. 3c). Erst bei Stillstand des Hauptantriebs 6, also bei ruhendem Werkstück 4, wird der Endschnitt 14 nur durch Bewegen des Laserstrahls 5 mittels des Zusatzantriebs 7 ausgeführt.

Wie in Fig. 3d gezeigt, wird während der Bearbeitung der Vakuumsauger 10 mittels des X-Antriebs 11 zum Zeitpunkt t_{X} (t_{X} < t_{FC}) auf die Geschwindigkeit des Hauptantriebs 6 beschleunigt und dann ohne Relativbewegung zum Werkstück 4 synchron mit dem Werkstück 4 in der X-Achse verfahren und bis zum Stillstand abgebremst. Sobald sich der Vakuumsauger 10 synchron mit dem Werkstück 4 bewegt, wird zum Zeitpunkt t_{Z} (t_{X} < t_{Z} < t_{FC}) der Z-Antrieb 11 angesteuert (Fig. 3e), um den Vakuumsauger 10 an der späteren Position des freigeschnittenen Werkstückteils 2 über dem verfahrenden Werkstück 4 auf die Werkstückoberfläche abzusenken. Wie in Fig. 3e weiter gezeigt, wird zeitgleich bzw. nahezu zeitgleich zum Absenken auch mit dem Aufbau des Vakuums im Vakuumsauger 10 begonnen, damit der Vakuumsauger 10 noch vor dem Abbremsen des Hauptantriebs 6 am noch nicht freigeschnittenen Werkstückteil 2 fixiert ist. Der Vakuumsauger 10 kann auch noch während des Abbremsens am noch nicht freigeschnittenen Werkstückteil 2 fixiert werden, wobei dann mit dem Vakuumaufbau im Vakuumsauger 10 um die Aktivierungszeit T_{A}, die zum Aufbau des Vakuums im Vakuumsauger 10 erforderlich ist, vor dem Zeitpunkt t_{FC} begonnen werden muss, damit der Vakuumsauger 10 spätestens bei Stillstand des Werkstücks 4 am gerade freigeschnittenen Werkstückteil 2 fixiert ist. Bei Schnittende (Zeitpunkt t_{P}) kann der Vakuumsauger 10 samt Werkstückteil 2 simultan mit dem Laserschneidkopf 8 in Z-Richtung vom Werkstück 4 wegfahren und das Werkstück 4 ohne zeitliche Unterbrechung durch die Teileentnahme zur nächsten Bearbeitung positioniert werden.

Statt wie oben beschrieben den Laserstrahl 5 in X-Richtung durch Verfahren des Laserschneidkopfes 8 zu bewegen, ist es alternativ auch möglich, den Laserstrahl 5 über eine im Laserschneidkopf 8 integrierte Ablenkoptik **15** (Fig. 1), welche mittels des Zusatzantriebs 7 ablenkbar ist und z.B. als verschwenkbarer Scannerspiegel ausgebildet sein kann, in X-Richtung auf dem Werkstück 4 zu bewegen.

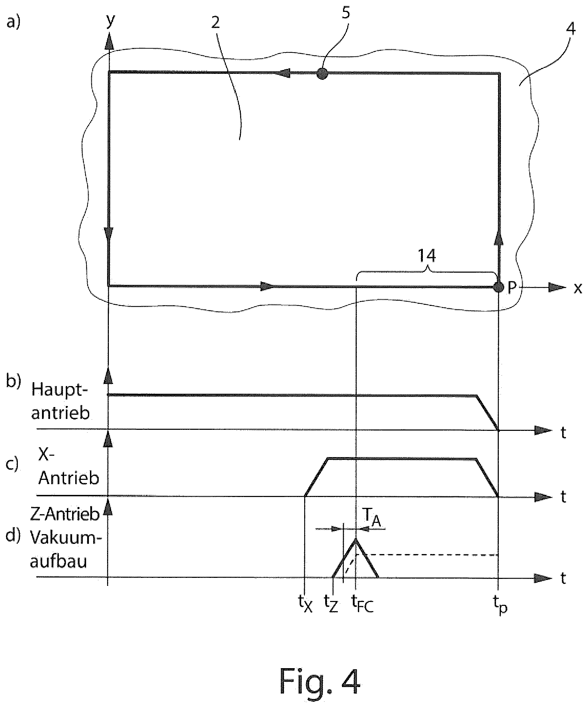

In **Fign. 4a bis 4d** ist eine dritte Verfahrensvariante zum hauptzeitparallelen Entladen eines freigeschnittenen Werkstückteils 2 gezeigt.

Fig. 4a zeigt wieder die Bewegung des Laserstrahls 5 auf dem Werkstück 4 in X- und Y-Richtung, um das Werkstückteil 2 zu schneiden. Anders als in der ersten und zweiten Verfahrensvariante gibt es hier keinen Zusatzantrieb, so dass die Bewegung des Laserstrahls 5 auf dem Werkstück 4 allein durch das Verfahren des Werkstücks 4 mittels des Hauptantriebs 6 erfolgt.

Wie in Fig. 4b gezeigt, wird der Hauptantrieb 6 in X-Richtung erst kurz vor Ende des X-parallelen Endschnitts 14 bis zum Stillstand abgebremst, wobei bei Stillstand des Hauptantriebs 6 der Endschnitt 14 abgeschlossen, also das Werkstückteil 2 freigeschnitten ist.

Wie in Fig. 4c gezeigt, wird während der Bearbeitung der Vakuumsauger 10 mittels des X-Antriebs 11 zum Zeitpunkt t_{X} (t_{X} < t_{FC}) auf die Geschwindigkeit des Hauptantriebs 6 beschleunigt und dann ohne Relativbewegung zum Werkstück 4 synchron mit dem Werkstück 4 in der X-Achse verfahren und bis zum Stillstand abgebremst. Sobald sich der Vakuumsauger 10 synchron mit dem Werkstück 4 bewegt, wird zum Zeitpunkt t_{Z} (t_{X} < t_{Z} < t_{FC}) der Z-Antrieb 11 angesteuert (Fig. 4d), um den Vakuumsauger 10 an der späteren Position des freigeschnittenen Werkstückteils 2 über dem fahrenden Werkstück 4 auf die Werkstückoberfläche abzusenken. Wie in Fig. 4d weiter gezeigt, wird zeitgleich bzw. nahezu zeitgleich zum Absenken auch mit dem Aufbau des Vakuums im Vakuumsauger 10 begonnen, damit der Vakuumsauger 10 noch vor dem Abbremsen des Hauptantriebs 6 am noch nicht freigeschnittenen Werkstückteil 2 fixiert ist. Der Vakuumsauger 10 kann auch noch während des Abbremsens am noch nicht freigeschnittenen Werkstückteil 2 fixiert werden, wobei dann mit dem Vakuumaufbau im Vakuumsauger 10 um die Aktivierungszeit T_{A}, die zum Aufbau des Vakuums im Vakuumsauger 10 erforderlich ist, vor dem Schnittende bzw. vor Stillstand des Hauptantriebs 6 begonnen werden muss, damit der Vakuumsauger 10 spätestens bei Stillstand des Werkstücks 4 am Werkstückteil 2 fixiert ist. Bei Schnittende (Zeitpunkt t_{P}) kann der Vakuumsauger 10 samt Werkstückteil 2 simultan mit dem Laserschneidkopf 8 in Z-Richtung vom Werkstück 4 wegfahren und das Werkstück 4 ohne zeitliche Unterbrechung durch die Teileentnahme zur nächsten Bearbeitung positioniert werden.

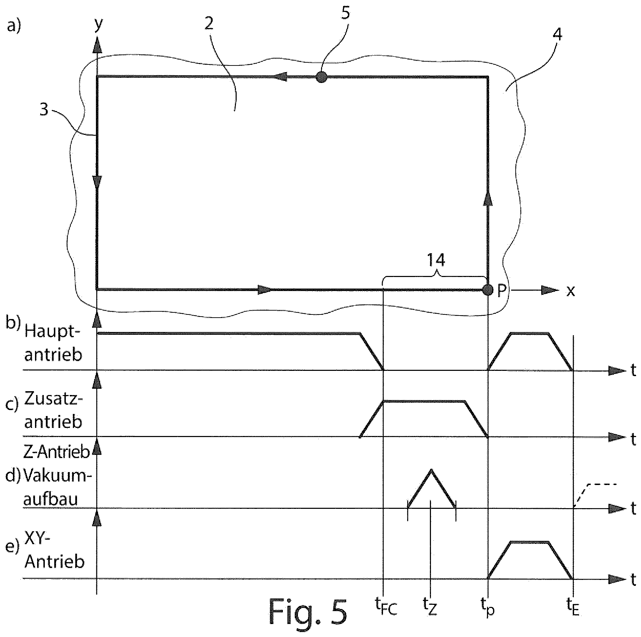

In **Fign. 5a bis 5e** ist eine vierte Verfahrensvariante zum hauptzeitparallelen Entladen eines freigeschnittenen Werkstückteils 2 gezeigt. Von der in Fign. 2a bis 2d gezeigten ersten Verfahrensvariante unterscheidet sich die vierte Verfahrensvariante durch folgende Merkmale:
- Zu einem Zeitpunkt t_{Z} (t_{FC} ≤ t_{Z} ≤ t_{P}), welcher vorteilhaft zwischen dem Anfang (t_{FC}) und dem Ende (t_{P}) des Endschnitts 14 liegt, wird der Vakuumsauger 10 in Richtung auf das Werkstückteil 2 abgesenkt, ohne dabei auf dem Werkstückteil 2 zu klemmen. Der Vakuumsauger 10 wird also erst abgesenkt, wenn das Werkstückteil 2 ruht. Alternativ kann der Vakuumsauger 10 auch bei noch bewegtem Werkstückteil in Richtung auf das Werkstückteil 2 abgesenkt werden. Insbesondere setzt in diesem Fall der Vakuumsauger 10 erst dann auf das Werkstückteil 2 kräfte frei auf, wenn das Werkstückteil 2 ruht.
- Nach dem Ende des Endschnitts 14 werden sowohl das Werkstück 4 samt dem darin freigeschnittenen Werkstückteil 2 mittels des Hauptantriebs 6 als auch der über dem freigeschnittenen Werkstückteil 2 befindliche Vakuumsauger 10 mittels eines in Fig. 5e angedeuteten XY-Antriebs gemeinsam in eine Entnahmeposition seitlich (d.h. in der X-Y-Ebene) verschoben (Zeitpunkt t_{E}), die für die Herausnahme des Werkstückteils 2 aus dem Restgitter besser geeignet ist. Erst dann erfolgt der Vakuumaufbau im Vakuumsauger 10, wie durch die gestrichelte Linie in Fig. 5d) angedeutet ist, um das Entladeelement 10 am freigeschnittenen Werkstückteil 2 zu fixieren. In der Entnahmeposition kann das Werkstückteil 2 mit Pins nach oben aus dem Restgitter ausgedrückt werden, so dass vom Vakuumsauger 10 nur das Werkstückteil 2 und nicht auch das Restgitter angesaugt wird.

Um zu verhindern, dass durch das seitliche Verschieben das freigeschnittene Werkstückteil 2 verkippt oder sich unter oder über das Restgitter schiebt, wird der Vakuumsauger 10 bis auf einen Abstand, der kleiner als die Werkstückdicke ist, auf das Werkstückteil 2 abgesenkt. Dadurch ist das freigeschnittene Werkstückteil 2 zwischen einer Werkstückauflage (z.B. Auflagebürsten) und dem Vakuumsauger 10 weiterhin im Restgitter gehalten, aber noch nicht am Entladeelement fixiert. Insbesondere kann der Vakuumsauger 10 auch bis zur kräftefreien Auflage auf das Werkstückteil 2 abgesenkt werden, allerdings ohne dabei auf dem Werkstückteil 2 zu klemmen.

Sobald das freigeschnittene Werkstückteil 2 zu kippen beginnt, drückt der nach oben kippende Abschnitt des Werkstückteils 2 den Vakuumsauger 10 gegen dessen Gewichts- und Federkraft nach oben und der nach unten kippende Abschnitt des Werkstückteils 2 die Auftagebürsten gegen deren Federkraft nach unten, so dass Rückstellkräfte entstehen, die das Werkstückteil 2 innerhalb des Restgitters halten.

## Patentansprüche

1. Verfahren zum hauptzeitparallelen Entladen eines Werkstückteils (2) mittels eines Entladeelements (10), insbesondere eines Vakuumsaugers,
wobei das Werkstückteil (2) aus einem insbesondere plattenförmigen Werkstück (4) mittels eines Laserstrahls (5) geschnitten wird, dessen Sollbewegung auf dem Werkstück (4) zumindest entlang einer ersten Bewegungsachse (X) in eine Bewegung des Werkstücks (4) und eine Bewegung des Laserstrahls (5) aufgeteilt wird, und
wobei vor dem Ausführen eines das Werkstückteil (2) vom Werkstück (4) trennenden Endschnitts (14) das Werkstück (4) bis zum Stillstand abgebremst wird und anschließend der Endschnitt (14) nur durch Bewegen des Laserstrahls (5) ausgeführt wird,
**dadurch gekennzeichnet**,(a) dass das Entladeelement (10) spätestens am Ende des ausgeführten Endschnitts (14) in Richtung auf das Werkstückteil (2) abgesenkt wird, ohne dabei auf dem Werkstückteil (2) zu klemmen, und dass das Werkstück (4) samt dem darin freigeschnittenen Werkstückteil (2) und das über dem freigeschnittenen Werkstückteil (2) befindliche Entladeelement (10) gemeinsam in eine Entnahmeposition seitlich verschoben werden, in der das Entladeelement (10) am freigeschnittenen Werkstückteil (2) fixiert wird, oder (b) dass das Entladeelement (10) zumindest entlang der ersten Bewegungsachse (X) ohne Relativbewegung zum Werkstück (4) synchron mit dem Werkstück (4) bis zum Stillstand abgebremst und spätestens bei Stillstand des Werkstücks (4) am noch nicht freigeschnittenen Werkstückteil (2) fixiert wird.

2. Verfahren nach Anspruch 1, **dadurch gekennzeichnet, dass** die Sollbewegung des Laserstrahls auch entlang einer zweiten Bewegungsachse (Y) in eine Bewegung des Werkstücks und eine Bewegung des Laserstrahls aufgeteilt wird.

3. Verfahren nach Anspruch 1 oder 2, **dadurch gekennzeichnet, dass** in der Variante (b) vor dem Abbremsen das Entladeelement (10) ohne Relativbewegung zum Werkstück (4) synchron mit dem Werkstück (4) bewegt und dabei am noch nicht freigeschnittenen Werkstückteil (2) fixiert wird.

4. Verfahren nach Anspruch 1 oder 2, **dadurch gekennzeichnet, dass** in der Variante (b) vor dem Abbremsen das Entladeelement (10) ohne Relativbewegung zum Werkstück (4) synchron mit dem Werkstück (4) bewegt und dabei auf dem Werkstückteil (2) aufgelegt wird, um so das Werkstückteil (2) in der Ebene des Werkstücks (4) zu stabilisieren, bevor das Entladeelement (10), insbesondere nach Stillstand des Werkstücks (4), das Werkstückteil (2) fixiert.

5. Verfahren nach einem der vorhergehenden Ansprüche, **dadurch gekennzeichnet, dass** in der Variante (b) das Entladeelement (10) um mindestens seine Aktivierungszeit (T_{A}) vor dem Stillstand des Werkstücks (4), insbesondere vor Abbremsbeginn des Werkstücks (4), aktiviert wird.

6. Verfahren nach einem der vorhergehenden Ansprüche, **dadurch gekennzeichnet, dass** in der Variante (b) das Entladeelement (10) während der synchronen Bewegung mit dem Werkstück (4) in Richtung auf das Werkstück (4) bis auf eine Wechselwirkungshöhe abgesenkt wird.

7. Verfahren nach einem der Ansprüche 2 bis 6, **dadurch gekennzeichnet, dass** in der Variante (b) das Entladeelement (10) entlang der beiden Bewegungsachsen (X, Y) ohne Relativbewegung zum Werkstück (4) synchron mit dem Werkstück (4) bis zum Stillstand abgebremst und dabei am noch nicht freigeschnittenen Werkstückteil (2) fixiert wird.

8. Verfahren nach Anspruch 1 oder 2, **dadurch gekennzeichnet, dass** in der Variante (a) das Entladeelement (10) frühestens bei Stillstand des Werkstücks (4) in Richtung auf das noch nicht freigeschnittene Werkstückteil (2) abgesenkt wird, ohne dabei auf dem Werkstückteil (2) zu klemmen.

9. Verfahren nach Anspruch 1, 2 oder 8, **dadurch gekennzeichnet, dass** in der Variante (a) das Entladeelement (10) bis auf einen Abstand (D), der kleiner als die Werkstückdicke (d) ist, auf das Werkstückteil (2) abgesenkt wird.

10. Verfahren nach Anspruch 9, **dadurch gekennzeichnet, dass** das Entladeelement (10) bis zur Auflage auf dem Werkstückteil (2) abgesenkt wird.

11. Verfahren nach Anspruch 1, 2, 8, 9 oder 10, **dadurch gekennzeichnet, dass** in der Variante (a) das freigeschnittene Werkstückteil (4) aus dem restlichen Werkstück (4) von unten angehoben wird und das Entladeelement (10) in der Entnahmeposition am angehobenen Werkstückteil (2) fixiert wird.

12. Verfahren nach einem der vorhergehenden Ansprüche, **dadurch gekennzeichnet, dass** vor dem Ausführen des Endschnitts (14) die Bewegung des Laserstrahls (5) in dem Maße beschleunigt wird, wie die Bewegung des Werkstücks (4) abgebremst wird.

13. Laserschneidmaschine (1) zum Laserschneiden eines Werkstückteils (2) aus einem insbesondere plattenförmigen Werkstück (4) mittels eines Laserstrahls (5),
mit einem Hauptantrieb (6) zum Bewegen des Werkstücks (4) zumindest entlang einer ersten Bewegungsachse (X),
mit einem Zusatzantrieb (7) zum Bewegen eines den Laserstrahl (5) auf das Werkstück (4) ausrichtenden Laserbearbeitungskopfes (8) zumindest entlang der ersten Bewegungsachse (X) oder zum Bewegen einer den Laserstrahl (5) auf das Werkstück (4) zumindest entlang der ersten Bewegungsachse (X) ablenkenden Ablenkoptik (15),
mit einem relativ zum Werkstück (4) absenkbaren und anhebbaren Entladeelement (10), insbesondere Vakuumsauger, zum Entladen des freigeschnittenen Werkstückteils (2), und
mit einer Maschinensteuerung (13), die programmiert ist, das Verfahren nach einem der vorhergehenden Ansprüche auszuführen.

14. Laserschneidmaschine nach Anspruch 13, **dadurch gekennzeichnet, dass** ein Antrieb (12) zum Bewegen des Entladeelements (10) zumindest entlang der ersten Bewegungsachse (X) vorgesehen ist.

15. Computerprogrammprodukt, welches Codemittel aufweist, die zum Durchführen aller Schritte des Verfahrens nach einem der Ansprüche 1 bis 12 angepasst sind, wenn das Programm auf einer Maschinensteuerung (13) einer Laserschneidmaschine (1) abläuft.

## Claims

1. A method for the unloading of a workpiece part (2) in parallel with processing time by means of an unloading element (10), especially a vacuum sucker, wherein the workpiece part (2) is cut from an especially plate-shaped workpiece (4) by means of a laser beam (5), the desired movement of which on the workpiece (4) at least along a first movement axis (X) is divided into a movement of the workpiece (4) and a movement of the laser beam (5), and wherein before executing a final cut (14), which separates the workpiece part (2) from the workpiece (4), the workpiece (4) is decelerated until standstill and the final cut (14) is then executed only by moving the laser beam (5), **characterized in that**
(a) the unloading element (10) is lowered in the direction toward the workpiece part (2) at the latest at the end of the executed final cut (14), without clamping on said workpiece part (2) in the process, and the workpiece (4) together with the cut free workpiece part (2) therein and the unloading element (10), which is located above the cut free workpiece part (2), are laterally displaced together into a withdrawal position in which the unloading element (10) is fixed on the cut free workpiece part (2), or
(b) the unloading element (10) is decelerated synchronously with the workpiece (4) until standstill at least along the first movement axis (X) without movement relative to the workpiece (4) and is fixed on the not yet cut free workpiece part (2) at the latest at the standstill of the workpiece (4).

2. The method as claimed in claim 1, **characterized in that** the desired movement of the laser beam is also divided into a movement of the workpiece and a movement of the laser beam along a second movement axis (Y).

3. The method as claimed in claim 1 or 2, **characterized in that** in the variant (b) the unloading element (10), before the decelerating, is moved synchronously with the workpiece (4) without movement relative to said workpiece (4) and is fixed in the process on the not yet cut free workpiece part (2).

4. The method as claimed in claim 1 or 2, **characterized in that** in the variant (b) the unloading element (10), before the decelerating, is moved synchronously with the workpiece (4) without movement relative to said workpiece (4) and is laid on the workpiece part (2) in the process in order to thereby stabilize the workpiece part (2) in the plane of the workpiece (4) before the unloading element (10) fixes the workpiece part (2), especially after the standstill of the workpiece (4).

5. The method as claimed in one of the preceding claims, **characterized in that** in the variant (b) the unloading element (10) is activated at least by its activation time (T_{A}) before the standstill of the workpiece (4), especially before deceleration of the workpiece (4) commences.

6. The method as claimed in one of the preceding claims, **characterized in that** in the variant (b) the unloading element (10), during the synchronous movement with the workpiece (4), is lowered in the direction toward the workpiece (4) up to an interaction height.

7. The method as claimed in one of claims 2 to 6, **characterized in that** in the variant (b) the unloading element (10) is decelerated synchronously with the workpiece (4) until standstill along the two movement axes (X, Y) without movement relative to the workpiece (4) and is fixed on the not yet cut free workpiece part (2) in the process.

8. The method as claimed in claim 1 or 2, **characterized in that** in the variant (a) the unloading element (10) is lowered at the earliest at the standstill of the workpiece (4) in the direction toward the not yet cut free workpiece part (2) without clamping on said workpiece part (2) in the process.

9. The method as claimed in claim 1, 2 or 8, **characterized in that** in the variant (a) the unloading element (10) is lowered onto the workpiece part (2) save for a distance (D) which is smaller than the workpiece thickness (d).

10. The method as claimed in claim 9, **characterized in that** the unloading element (10) is lowered until resting on the workpiece part (2).

11. The method as claimed in claim 1, 2, 8, 9 or 10, **characterized in that** in the variant (a) the cut free workpiece part (4) is lifted from the remaining workpiece (4) from the bottom and the unloading element (10) is fixed on the lifted workpiece part (2) in the withdrawal position.

12. The method as claimed in one of the preceding claims, **characterized in that** before executing the final cut (14) the movement of the laser beam (5) is accelerated to the same extent as the movement of the workpiece (4) is decelerated.

13. A laser cutting machine (1) for the laser cutting of a workpiece part (2) from an especially plate-shaped workpiece (4) by means of a laser beam (5), comprising
a main drive (6) for moving the workpiece (4) at least along a first movement axis (X),
an auxiliary drive (7) for moving a laser machining head (8), which directs the laser beam (5) onto the workpiece (4), at least along the first movement axis (X) or for moving a deflection optical device (15) which deflects the laser beam (5) onto the workpiece (4) at least along the first movement axis (X),
an unloading element (10) which can be lowered and lifted relative to the workpiece (4), especially a vacuum sucker, for unloading the cut free workpiece part (2), and
a machine control unit (13) which is programmed to implement the method as claimed in one of the preceding claims.

14. The laser cutting machine as claimed in claim 13, **characterized in that** provision is made for a drive (12) for moving the unloading element (10) at least along the first movement axis (X).

15. A computer program product, which has coding means which are adapted for implementing all the steps of the method as claimed in one of claims 1 to 12 when the program runs on a machine control unit (13) of a laser cutting machine (1).

## Revendications

1. Procédé de déchargement, en temps masqué, d'une partie (2) d'une pièce au moyen d'un élément de déchargement (10), en particulier d'un dispositif d'aspiration par dépression,
sachant que ladite partie (2) est découpée dans une pièce (4) notamment en forme de plaque, au moyen d'un faisceau laser (5) dont le mouvement prescrit sur la pièce (4) est scindé, au moins le long d'un premier axe de mouvement (X), en un mouvement de ladite pièce (4) et en un mouvement dudit faisceau laser (5), et
sachant que, préalablement à l'exécution d'une découpe finale (14) séparant la partie (2) d'avec la pièce (4), ladite pièce (4) est freinée jusqu'à l'immobilisation, ladite découpe finale (14) étant ensuite exécutée uniquement par mouvement du faisceau laser (5),
**caractérisé par** le fait (a) que l'élément de déchargement (10) est abaissé en direction de la partie (2) de la pièce, au plus tard à la fin de la découpe finale (14) exécutée, sans n'exercer alors aucun coincement sur ladite partie (2) de la pièce, et sachant que ladite pièce (4), la partie (2) qui en est dissociée par découpe, et l'élément de déchargement (10) surplombant ladite partie (2) dissociée par découpe, sont conjointement animés d'un déport latéral vers un emplacement d'enlèvement auquel ledit élément de déchargement (10) est bloqué à demeure sur ladite partie (2) dissociée par découpe ; ou par le fait (b) que ledit élément de déchargement (10) est freiné en synchronisme avec la pièce (4) jusqu'à l'immobilisation, au moins le long du premier axe de mouvement (X), sans mouvement relatif par rapport à ladite pièce (4), et est bloqué à demeure sur la partie (2) non encore dissociée par découpe, au plus tard lors de l'immobilisation de ladite pièce (4).

2. Procédé selon la revendication 1, **caractérisé par le fait que** le mouvement prescrit du faisceau laser est scindé, également le long d'un second axe de mouvement (Y), en un mouvement de la pièce et en un mouvement dudit faisceau laser.

3. Procédé selon la revendication 1 ou 2, **caractérisé par le fait que** dans la variante (b), préalablement au freinage, l'élément de déchargement (10) est mû en synchronisme avec la pièce (4) sans mouvement relatif par rapport à ladite pièce (4), en étant alors bloqué à demeure sur la partie (2) de ladite pièce non encore dissociée par découpe.

4. Procédé selon la revendication 1 ou 2, **caractérisé par le fait que** dans la variante (b), préalablement au freinage, l'élément de déchargement (10) est mû en synchronisme avec la pièce (4) sans mouvement relatif par rapport à ladite pièce (4), en étant alors déposé sur la partie (2) de ladite pièce, afin de stabiliser ainsi ladite partie (2) dans le plan de ladite pièce (4) avant que ledit élément de déchargement (10) ne bloque ladite partie (2) à demeure, notamment après immobilisation de ladite pièce (4).

5. Procédé selon l'une des revendications précédentes, **caractérisé par le fait que** dans la variante (b), l'élément de déchargement (10) est activé au moins pour la durée de son temps d'activation (T_{A}), avant l'immobilisation de la pièce (4), en particulier avant le début du freinage de ladite pièce (4).

6. Procédé selon l'une des revendications précédentes, **caractérisé par le fait que** dans la variante (b), l'élément de déchargement (10) est abaissé en direction de la pièce (4) au cours du mouvement synchrone avec ladite pièce (4), avec réservation d'une hauteur d'interaction.

7. Procédé selon l'une des revendications 2 à 6, **caractérisé par le fait que** dans la variante (b), l'élément de déchargement (10) est freiné en synchronisme avec la pièce (4) jusqu'à l'immobilisation, le long des deux axes de mouvement (X, Y), sans mouvement relatif par rapport à ladite pièce (4), en étant alors bloqué à demeure sur la partie (2) de ladite pièce non encore dissociée par découpe.

8. Procédé selon la revendication 1 ou 2, **caractérisé par le fait que** dans la variante (a), l'élément de déchargement (10) est abaissé en direction de la partie (2) de la pièce non encore dissociée par découpe, au plus tôt lors de l'immobilisation de ladite pièce (4), sans n'exercer alors aucun coincement sur ladite partie (2).

9. Procédé selon la revendication 1, 2 ou 8, **caractérisé par le fait que** dans la variante (a), l'élément de déchargement (10) est abaissé sur la partie (2) de la pièce, avec réservation d'une distance (D) plus petite que l'épaisseur (d) de ladite pièce.

10. Procédé selon la revendication 9, **caractérisé par le fait que** l'élément de déchargement (10) est abaissé jusqu'à la venue en applique contre la partie (2) de la pièce.

11. Procédé selon la revendication 1, 2, 8, 9 ou 10, **caractérisé par le fait que** dans la variante (a), la partie (2) de la pièce, dissociée par découpe, est soulevée du reste de ladite pièce (4) et l'élément de déchargement (10) est bloqué à demeure, à l'emplacement d'enlèvement, sur ladite partie (2) soulevée.

12. Procédé selon l'une des revendications précédentes, **caractérisé par le fait que**, préalablement à l'exécution de la découpe finale (14), le mouvement du faisceau laser (5) est accéléré à la mesure du freinage du mouvement de la pièce (4).

13. Machine (1) de découpe au laser conçue pour découper une partie (2) dans une pièce (4) notamment en forme de plaque, au moyen d'un faisceau laser (5), comprenant
un entraînement principal (6) destiné à mouvoir ladite pièce (4), au moins le long d'un premier axe de mouvement (X),
un entraînement additionnel (7) destiné à mouvoir, au moins le long du premier axe de mouvement (X), une tête (8) d'usinage au laser qui aligne le faisceau laser (5) sur ladite pièce (4), ou à mouvoir une optique de déviation (15) qui dévie ledit faisceau laser (5) vers ladite pièce (4), au moins le long dudit premier axe de mouvement (X),
un élément de déchargement (10), en particulier un dispositif d'aspiration par dépression pouvant être abaissé et relevé par rapport à ladite pièce (4), en vue du déchargement de la partie (2) dissociée de ladite pièce par découpe, et
une commande machine (13), programmée pour l'exécution du procédé conforme à l'une des revendications précédentes.

14. Machine de découpe au laser selon la revendication 13, **caractérisée par le fait qu'**un entraînement (12) est prévu pour mouvoir l'élément de déchargement (10) au moins le long du premier axe de mouvement (X).

15. Produit de programme informatique, muni de moyens de codage adaptés à l'exécution de toutes les étapes du procédé conforme à l'une des revendications 1 à 12 lorsque ledit programme se déroule sur une commande (13) d'une machine (1) de découpe au laser.
